# EUROPÄISCHE PATENTANMELDUNG

(11) **EP 0 865 736 A2**
(43) Veröffentlichungstag der Anmeldung: **23.09.1998**
(21) Anmeldenummer: 98104680.8
(22) Anmeldetag: 16.03.1998
(51) Int. Cl.: A23G 1/20, A23G 3/20

(54) **Düse zum Herstellen eines Verzehrgutes**

(30) Priorität: 21.03.1997 DE 19711853; 29.07.1997 DE 19732593
(71) Anmelder: KMB Produktions AG, 8552 Felben (CH)
(72) Erfinder: Knobel, Josef, 5586 Wigoltingen (CH)
(74) Vertreter: Weiss, Peter, Dr.

(57) **Zusammenfassung**

Bei einer Düse zum Herstellen eines Verzehrgutes aus einem Mantel und einer Füllung wird ein Innenrohr (5), welches von einer Axialbohrung (13) zum Führen der Füllung durchzogen ist, von einem Aussenrohr (3) umfangen, welches mit dem Innenrohr (5) einen Ringkanal (4) zum Führen eines den Mantel bildenden Stoffes ausbildet. Dabei soll eine Innenfläche (15) des Aussenrohres (3) zumindest nahe der Ausmündung (11) der Düse (2) von einer Aussenfläche (16) des Innenrohres (5) im querschnittlichen Bereich des Ringkanals (4) einen unterschiedlichen Abstand (a) einhalten.

## Beschreibung

Die Erfindung betrifft eine Düse zum Herstellen eines Verzehrgutes aus einem Mantel und einer Füllung mit einem Innenrohr, welches von einer Axialbohrung zum Führen der Füllung durchzogen ist, und einem das Innenrohr umfangenden Aussenrohr, welches mit dem Innenrohr einen Ringkanal zum Führen eines den Mantel bildenden Stoffes ausbildet.

Beispielsweise Pralinen bestehen aus einem Schokoladenmantel und einer beliebigen Füllung und werden heute im industriellen Bereich automatisch in der sogenannten One-Shot-Technologie hergestellt. In diesem Verfahren wird in eine Form durch eine einzige Düse, und zwar durch den oben erwähnten Ringkanal, die Schokolade eingebracht und gleichzeitig durch die Axialbohrung eine Füllung, wobei die Füllung den Schokoladenmantel gegen die Formwand drückt, und so durch einen einzigen "Schuss" eine geschlossene Praline aus Mantel mit Füllung hergestellt wird.

Da Innenrohr und Aussenrohr konzentrisch insbesondere im Bereich der Mündung ausgestaltet sind, gelangt in allen Bereichen des Ringkanals die gleiche Menge an Stoff für den Mantel in die Form, so dass je nach Ausgestaltung der Form der Mantel an manchen Stellen unterschiedlich dick ausgebildet ist, was in vielen Fällen nicht wünschenswert ist.

Der vorliegenden Erfindung liegt die Aufgabe zugrunde, eine Düse der oben genannten Art zu schaffen, mittels der eine Dicke eines Mantels über den gesamten Bereich des Ringkanals bestimmt werden kann.

Zur Lösung dieser Aufgabe führt, dass eine Innenfläche des Aussenrohres zumindest nahe der Ausmündung der Düse von einer Aussenfläche des Innenrohres im querschnittlichen Bereich des Ringkanals einen unterschiedlichen Abstand einhält.

Dies bedeutet, dass Innenrohr und Aussenrohr nicht mehr konzentrisch ineinander geführt sind, sondern unterschiedliche geometrische Querschnitte aufweisen können, wodurch es möglich wird, dass insbesondere der Mantel über den querschnittlichen Bereich des Ringkanals hinweg eine unterschiedliche Dicke aufweisen kann. Je nach Wunsch wird in bestimmten Bereichen des Ringkanals mehr oder weniger Raum freigegeben, durch den Mantelstoff geführt werden kann. Dementsprechend gelangt auch in diesem Bereich mehr oder weniger Mantelstoff in die Form, so dass der Mantel in diesem Bereich mehr oder weniger dick ausgebildet wird.

Ein weiteres Merkmal der vorliegenden Erfindung betrifft eine Ausmündung von Innenrohr und/oder Aussenrohr. Diese Ausmündung kann abgeschrägt und/oder unterschiedlich lang ausgebildet sein. Auch hierdurch wird die Verteilung von Füllung und Mantel des herzustellenden Verzehrgutes je nach Wunsch beeinflusst.

Eine Folge dieser Düsenausgestaltung ist, dass nunmehr eine exakte Positionierung der Düse gegenüber der Form erfolgen muss. Meist steckt diese Düse in einem Düsenbalken, so dass diese Düse gegenüber dem Düsenbalken positioniert werden muss. Der Einfachheit halber geschieht dies dadurch, dass von einem Düsenkörper ein Stift abragt, der exzentrisch angeordnet ist. Diesem Positionierstift ist wiederum eine exzentrische Positionierbohrung zugeordnet. Wird der Düsenkörper in den Düsenbalken eingesetzt und gedreht, so findet der Positionierstift nur in einer einzigen Position die Positionierbohrung, so dass die Lage der Düse gegenüber dem Düsenbalken exakt definiert ist.

Auch Aussenrohr und Innenrohr sollten gegenüber dem Düsenkörper bzw. gegeneinander positioniert werden. Dies geschieht durch entsprechende Positionierelemente, die bevorzugt vom Düsenkörper in eine innere Stufenbohrung einragen, wobei sowohl Innenrohr als auch Aussenrohr jeweils eine Positionierausnehmung aufweisen, die durch Drehen das entsprechende Positionierelement suchen.

Die Festlegung der erfindungsgemässen Düse in einem Düsenbalken erfolgt zum einen durch eine Überwurfhülse mit einem Aussengewinde, welche in eine Stufenbohrung im Düsenbalken eingedreht wird. Auch Aussenrohr und Innenrohr werden mittels einer Überwurfhülse in dem Düsenkörper festgelegt, wobei beabsichtigt ist, dass diese Überwurfhülse mit einem geringen Teil über dem Düsenkörper hervorsteht, so dass auf diesen überstehenden Teil ein Werkzeug aufgeschraubt werden kann, mittels welchem die Düse aus dem Düsenbalken gezogen wird. Beispielsweise geschieht dies, wenn die Düse und/oder der Düsenbalken gereinigt werden soll.

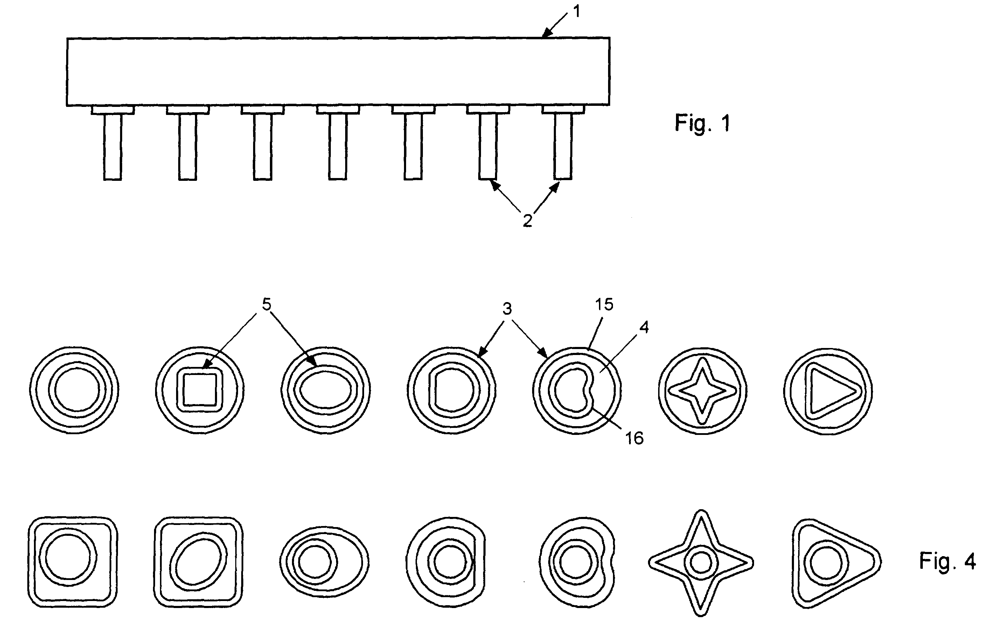

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf einen Düsenbalken einer Confiseriemaschine mit eingesetzten erfindungsgemässen Düsen;

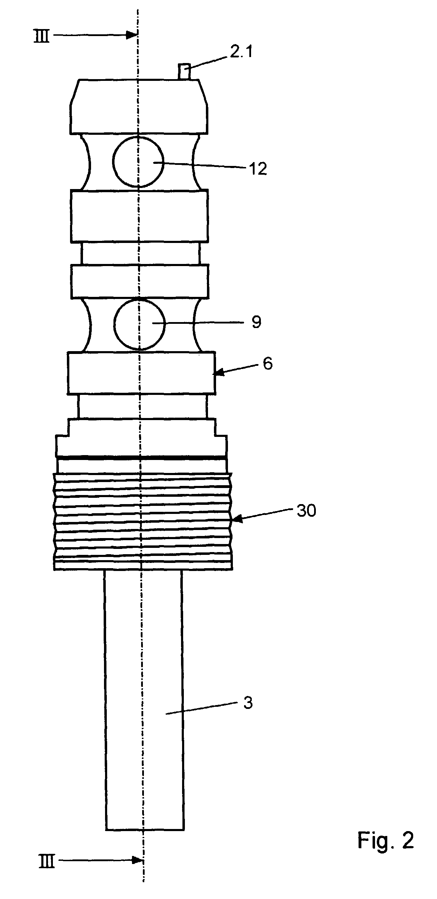

Figur 2 eine Draufsicht auf eine erfindungsgemässe Düse;
Figur 3 einen Längsschnitt durch die Düse gemäss Figur 2 entlang Linie III - III in Gebrauchslage in einem Düsenbalken;
Figur 4 eine Mehrzahl von Draufsichten auf Ausmündungen von Düsen mit verschiedenen Innen- bzw. Aussenrohren;
Figur 5 einen Längsschnitt durch einen Ausmündungsbereich eines weiteren Ausführungsbeispiel einer erfindungsgemässen Düse.

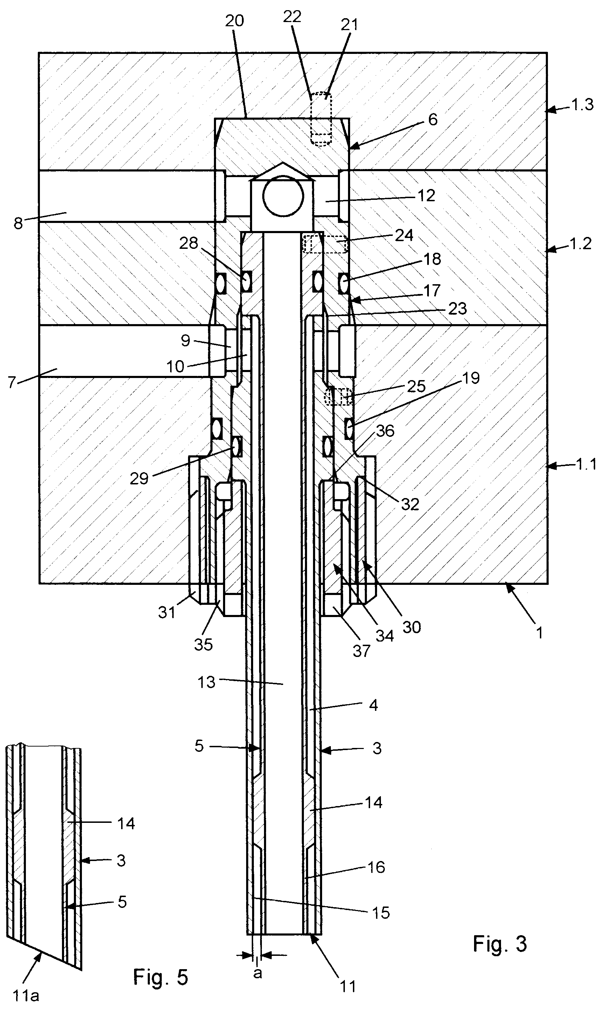

Für die Herstellung von beispielsweise Pralinen aus einem Mantel mit einer Füllung sind automatisch arbeitende Confiseriemaschinen vorgesehen, die zumindest einen Düsenbalken 1 aufweisen, der mit einer Vielzahl von Düsen 2 besetzt ist. Jede Düse 2 besitzt gemäss Figur 3 ein Aussenrohr 3, In dem unter Ausbildung eines Ringkanals 4 ein Innenrohr 5 angeordnet ist.

Das Aussenrohr 3 sitzt in einem Düsenkörper 6, der wiederum in den Düsenbalken 1 eingesetzt ist. Dabei ist der Düsenbalken 1 aus mehreren Platten 1.1, 1.2 und 1.3 aufgebaut, wobei in entsprechende Kontaktflächen Kanäle 7 und 8 eingeformt sind, über die ein Stoff für den Mantel bzw. die Füllung zur Düse 2 geführt werden kann. Der Kanal 7 steht dabei über Öffnungen 9 und 10 im Düsenkörper 6 bzw. im Aussenrohr 3 mit dem Ringkanal 4 in Verbindung, so dass über den Kanal 7, die Öffnungen 9 und 10 und den Ringkanal 4 Mantelstoff zu einer Ausmündung 11 der Düse 2 gelangen kann.

Der Kanal 8 wiederum steht über Radialbohrungen 12 im Düsenkörper 6 mit einer Axialbohrung 13 in dem Innenrohr 5 in Verbindung, so dass Füllung über den Kanal 8 durch die Radialbohrungen 12 und die Axialbohrung 13 zur Ausmündung 11 gelangen kann.

Das Innenrohr 5 stützt sich im übrigen über Längsrippen 14 gegen eine Innenfläche 15 des Aussenrohres 3 ab, so dass ein Abstand a der Innenfläche 15 von einer Aussenfläche 16 des Innenrohres 5 festgelegt ist.

Der Düsenkörper 6 sitzt in einer Stufenbohrung 17 in dem Düsenbalken 1, wobei die Kanäle 7 und 8 gegeneinander und nach aussen durch zwei Ringdichtungen 18 und 19 abgedichtet sind. Ferner ist in eine Stirnfläche 20 des Düsenkörpers 6 ein Positionierstift 21 eingesetzt, der in Gebrauchslage mit einer Positionierbohrung 22 in der Platte 1.3 des Düsenbalkens 1 zusammenwirkt.

In dem Düsenkörper 6 ist eine innere Stufenbohrung 23 vorgesehen, in die das Aussenrohr 3 und das Innenrohr 5 eingesetzt ist. Zu deren Positionierung ragen vom Düsenkörper 6 in die innere Stufenbohrung 23 jeweils stiftförmige Positionierelemente 24 und 25 ein, die in Gebrauchslage in Positionierausnehmungen 26 und 27 in dem Innenrohr 5 bzw. dem Aussenrohr 3 eingreifen.

Eine Abdichtung des Innenrohres 5 gegenüber dem Düsenkörper 6 und des Aussenrohres 3 gegenüber dem Düsenkörper 6 erfolgt wiederum durch entsprechende Ringdichtungen 28 und 29.

Insgesamt ist die Düse 2 mittels einer Überwurfhülse 30 in die innere Stufenbohrung 23 des Düsenbalkens 1 eingesetzt, wobei ein entsprechendes Aussengewinde 31 der Überwurfhülse 30 in ein nicht näher bezeichnetes Innengewinde der inneren Stufenbohrung 23 eingreift. Die Überwurfhülse 30 stützt sich gegen eine Schulter 32 des Düsenkörpers 6 ab.

Das Aussenrohr 3 stützt sich wiederum gegen eine Ringschulter 33 des Innenrohres 5 ab und hält dieses in der inneren Stufenbohrung 23 des Düsenkörpers 6. Gegenüber dem Düsenkörper 6 wird das Aussenrohr 3 durch eine Schraubhülse 34 festgelegt, welche mit einem Aussengewinde 35 in ein nicht näher bezeichnetes Innengewinde in dem Düsenkörper 6 eingreift. Dabei stützt sich die Schraubhülse 34 mit einer Ringkante 36 gegen eine weitere, nicht näher bezeichnete Schulter des Aussenrohres 3 ab.

Insbesondere in Figur 3 ist erkennbar, dass ein ringförmiger Teil 37 der Schraubhülse 34 aus der inneren Stufenbohrung 23 des Düsenkörpers 6 herausschaut, so dass ein Teil des Aussengewindes 35 von einem Werkzeug, wie später beschrieben, angegriffen werden kann.

Ein wesentliches Merkmal der vorliegenden Erfindung ist auf die Gestaltung der Ausmündung 11 gerichten, wobei in Figur 4 eine Vielzahl von Möglichkeiten angedeutet ist. Das Aussenrohr 3 kann konzentrisch, eckig oder beliebig geometrisch ausgestaltet sein. Das Gleiche gilt auch für das Innenrohr 5, so dass zwischen Innenrohr 5 und Aussenrohr 3 keine Konzentrik mehr gegeben ist, was bewirkt, dass der Abstand a zwischen der Innenfläche 15 des Aussenrohres 3 und der Aussenfläche 16 des Innenrohres 5 im Bereich der Ausmündung 11 der Düse und im Bereich des Ringkanals 4 variieren kann.

Die Funktionsweise der vorliegenden Erfindung ist folgende:

Bevorzugt arbeitet eine Confiseriemaschine, bei der die erfindungsgemässe Düse eingesetzt wird, nach dem One-Shot-Prinzip. Das bedeutet, dass durch eine Düse sowohl ein Mantel für eine Praline erzeugt als auch gleichzeitig eine Füllung in die Praline eingegeben wird. Diese Technik ist bekannt, weshalb auf eine nähere Beschreibung verzichtet wird.

Da Pralinen unterschiedlichster Ausgestaltung hergestellt werden sollen, ergibt sich das Problem, dass insbesondere die Wandstärken des Mantels an unterschiedlichen Stellen unterschiedlich dick sein sollen. Diesem Problem hilft der erfinderische Gedanke ab, dass durch eine unterschiedliche Ausgestaltung des Aussenrohres 3 bzw. des Innenrohres 5 diese im Bereich des Ringkanales 4 einen unterschiedlichen Abstand zueinander einhalten, so dass an unterschiedlichen Stellen unterschiedlich viel Stoff für einen Mantel beispielweise in eine Form eingespritzt wird.

Zum Zusammenbau der erfindungsgemässen Düse wird zuerst das Innenrohr 5 in die innere Stufenbohrung 23 des Düsenkörpers 6 eingesetzt und gegenüber dem Düsenkörper 6 dadurch zentriert, dass mit der Positionsausnehmung 26 durch Drehen das Positionierelement 24 gesucht wird. Sobald das Positionierelement 24 in die Positionierausnehmung 26 eingleitet, ist das Innenrohr 3 gegenüber dem Düsenkörper 6 positioniert.

Dasselbe geschieht auch mit dem Aussenrohr 3, welches über das Innenrohr 5 geführt wird. Durch Drehen sucht die Positionierausnehmung 27 das Positionierelement 25, wobei beim Einfahren des Positionierelementes 25 in die Positionierausnehmung 27 eine Ringkante des Aussenrohres 3 an der Ringschulter 33 des Innenrohres 5 anschlägt.

Das Aussenrohr 3 wird nun zusammen mit dem Innenrohr 5 mittels der Schraubhülse 34 in dem Düsenkörper 6 festgelegt, wobei die Schraubhülse 34 in die innere Stufenbohrung 23 des Düasenkörpers 6 eingeschraubt wird.

Nunmehr wird die gesamte Einheit aus Düsenkörper 6, Innenrohr 5 und Aussenrohr 3 in die Stufenbohrung 17 des Düsenbalkens 1 eingesetzt, wobei durch Drehen des Düsenkörpers 6 der exzentrisch angeordnete Positionierstift 21 seine Positionierbohrung 22 findet und damit auch die Lage der gesamten Düse 2 festgelegt ist. Insgesamt erfolgt nun eine Festlegung der Düse 2 gegenüber dem Düsenbalken 1 mittels der Überwurfhülse 30, welche in die Stufenbohrung 17 eingeschraubt wird.

Beispielsweise zum Reinigen muss die Düse 2 aus dem Düsenbalken 1 entnommen werden. Dies geschieht durch Lösen der Überwurfhülse 30, so dass das Teil 37 der Schraubhülse 34 freigegeben ist. Auf dieses Teil 37 kann ein Werkzeug mit einer entsprechenden Hülse aufgeschraubt werden, so dass durch Ziehen mittels diesem Werkzeug die Düse 2 selbst aus einer verharzten Stufenbohrung 17 einfach herausgezogen werden kann.

Entsprechend einem weiteren Ausführungsbeispiel einer Düse gemäss Figur 5 soll eine Ausmündung 11a von einem Innenrohr 16a und einem Aussenrohr 15a abgeschrägt ausgebildet sein. Hierdurch ergibt sich bei Fahren dieser Düse bspw. über eine Form eine andere, gewünschte Verteilung von Füllung bzw. Mantel.

Ferner kann auch vorgesehen sein, dass die Ausmündung 11a vom Innenrohr 16a bzw. Aussenrohr 15a unterschiedlich lang ausgebildet ist. Z. B. könnte das Innenrohr 16a vor dem Aussenrohr 15a ausmünden oder umgekehrt. Auch hierdurch wird die Verteilung von Füllung und/oder Mantel des Verzehrgutes beeinflusst.

| **Positionszahlenliste** | | | | | |
|---|---|---|---|---|---|
| 1 | Düsenbalken | 34 | Schraubhülse | a | Abstand |
| 2 | Düsen | 35 | Aussengewinde | 68 | |
| 3 | Aussenohr | 36 | Ringkante | 69 | |
| 4 | Ringkanal | 37 | Teil | 70 | |
| 5 | Innenrohr | 38 | | 71 | |
| 6 | Düsenkörper | 39 | | 72 | |
| 7 | Kanal | 40 | | 73 | |
| 8 | " | 41 | | 74 | |
| 9 | Öffnung | 42 | | 75 | |
| 10 | " | 43 | | 76 | |
| 11 | Ausmündung | 44 | | 77 | |
| 12 | Radialbohrung | 45 | | 78 | |
| 13 | Axialbohrung | 46 | | 79 | |
| 14 | Längsrippe | 47 | | | |
| 15 | Innenfläche | 48 | | | |
| 16 | Ausenfläche | 49 | | | |
| 17 | Stufenbohrung | 50 | | | |
| 18 | Ringdichtung | 51 | | | |
| 19 | " | 52 | | | |
| 20 | Stirnfläche | 53 | | | |
| 21 | Positionierstift | 54 | | | |
| 22 | Positionierbohrung | 55 | | | |
| 23 | innere Stufenbohrung | 56 | | | |
| 24 | Positionierelement | 57 | | | |
| 25 | " | 58 | | | |
| 26 | Positionierausnehmung | 59 | | | |
| 27 | " | 60 | | | |
| 28 | Ringdichtung | 61 | | | |
| 29 | " | 62 | | | |
| 30 | Überwurfhülse | 63 | | | |
| 31 | Aussengewinde | 64 | | | |
| 32 | Schulter | 65 | | | |
| 33 | Ringschulter | 66 | | | |

## Patentansprüche

1. Düse zum Herstellen eines Verzehrgutes aus einem Mantel und einer Füllung mit einem Innenrohr (5), welches von einer Axialbohrung (13) zum Führen der Füllung durchzogen ist, und einem das Innenrohr (5) umfangenden Aussenrohr (3), welches mit dem Innenrohr (5) einen Ringkanal (4) zum Führen eines den Mantel bildenden Stoffes ausbildet,
dadurch gekennzeichnet,
dass eine Innenfläche (15) des Aussenrohres (3) zumindest nahe der Ausmündung (11) der Düse (2) von einer Aussenfläche (16) des Innenrohres (5) im querschnittlichen Bereich des Ringkanals (4) einen unterschiedlichen Abstand (a) einhält.

2. Düse zum Herstellen eines Verzehrgutes aus einem Mantel und einer Füllung mit einem Innenrohr (5), welches von einer Axialbohrung (13) zum Führen der Füllung durchzogen ist, und einem das Innenrohr (5) umfangenden Aussenrohr (3), welches mit dem Innenrohr (5) einen Ringkanal (4) zum Führen eines den Mantel bildenden Stoffes ausbildet, dadurch gekennzeichnet, dass eine Ausmündung (11a) vom Innenrohr und7oder Aussenrohr (3) abgeschrägt und/oder unterschiedlich lang ausgebildet ist.

3. Düse nach Anspruch 1 oder 2, dadurch gekennzeichnet, dass das Aussenrohr (3) in einem Düsenkörper (6) steckt, der in einem Düsenbalken (1) positioniert ist.

4. Düse nach Anspruch 3, dadurch gekennzeichnet, dass die Positionierung des Düsenkörpers (6) gegenüber dem Düsenbalken (1) über einen Positionierstift (21) erfolgt, der in Gebrauchslage in eine Positionierbohrung (22) in dem Düsenbalken (1) eingreift.

5. Düse nach wenigstens einem der Ansprüche 1 - 4, dadurch gekenn- zeichnet, dass das Aussenrohr (3) eine Positionieraus-nehmung (27) aufweist, in welche in Gebrauchslage ein Po- sitionierelement (25) des Düsenkörpers (6) eingreift.

6. Düse nach wenigstens einem der Ansprüche 1 - 5, dadurch gekennzeichnet, dass das Innenrohr (5) eine Positionierausnehmung (26) aufweist, in welche in Gebrauchslage ein Positionierelement (24) des Düsenkörpers (6) eingreift.

7. Düse nach wenigstens einem der Ansprüche 1 - 6, dadurch gekennzeichnet, dass das Aussenrohr (3) mittels einer Schraubhülse (34) in dem Düsenkörper (6) gehalten ist, wobei die Schraubhülse (34) mit einem Aussengewinde (35) in ein Innengewinde des Düsenkörpers (6) eingreift.

8. Düse nach Anspruch 7, dadurch gekennzeichnet, dass die Schraubhülse (34) mit einem Teil (37) des Aussengewindes (35) aus dem Düsenkörper (6) herausragt.

9. Düse nach wenigstens einem der Ansprüche 4 - 8, dadurch gekennzeichnet, dass der Düsenkörper (6) mittels einer Überwurfhülse (30) mit Aussengewinde (31) in dem Düsenbalken (1) gehalten ist, wobei das Aussengewinde (35) dort in ein Innengewinde eingreift.

10. Düse nach wenigstens einem der Ansprüche 1 - 9, dadurch gekennzeichnet, dass eine Aussenfläche (16) des Innenrohres (5) und/oder eine Innenfläche (15) des Aussenrohres (3) mit Längsrippen als Abstandshalter und Zentrierelemente versehen ist/sind.
